# EUROPÄISCHE PATENTSCHRIFT

(11) **EP 2 165 379 B1**
(45) Veröffentlichungstag und Bekanntmachung des Hinweises auf die Patenterteilung: **10.09.2014**
(21) Anmeldenummer: 08784536.8
(22) Anmeldetag: 24.06.2008
(51) Int. Cl.: H01M 2/22, H01M 2/26, H01M 10/04, H01M 10/052, H01M 10/60

(54) **ELEKTROCHEMISCHE ENERGIESPEICHEREINHEIT**
ELECTROCHEMICAL ENERGY STORAGE UNIT
UNITÉ D'ACCUMULATION D'ÉNERGIE ÉLECTROCHIMIQUE

(30) Priorität: 06.07.2007 DE 102007031674
(43) Veröffentlichungstag der Anmeldung: 24.03.2010
(73) Patentinhaber: Behr GmbH & Co. KG, 70469 Stuttgart (DE)
(72) Erfinder: DAMSOHN, Herbert, 73773 Aichwald (DE); ISERMEYER, Tobias, 74245 Löwenstein (DE); ECKSTEIN, Jürgen, 71409 Schwaikheim (DE)
(74) Vertreter: Grauel, Andreas
(86) Internationale Anmeldenummer: PCT/EP2008/005068
(87) Internationale Veröffentlichungsnummer: WO 2009/006998

(56) Entgegenhaltungen:
- EP-A- 0 771 037
- EP-A- 1 333 520
- WO-A1-99/05749
- JP-A- 2006 344 572
- US-A1- 2003 118 898
- US-A1- 2003 190 522
- US-A1- 2005 026 014

## Beschreibung

Die Erfindung betrifft eine elektrochemische Energiespeichereinheit nach dem Oberbegriff des Anspruchs 1.

Insbesondere aus dem Bau von Kraftfahrzeugen mit elektrischem Antrieb, zum Beispiel einem Hybrid-Antrieb, sind elektrochemische Energiespeicher-einheiten von hoher Leistungsdichte bekannt. Unter anderem handelt es sich dabei um Lithium-Ionen oder Lithium-Polymer Energiespeichereinheiten, die beispielsweise aus gestapelten Flachzellen bestehen.

Ferner ist es bekannt, dass bei dem für diese Einsatzzwecke geforderten Profil so viel Verlustwärme erzeugt wird, dass eine permanente Kühlung derartiger elektrochemischer Energiespeichereinheiten unumgänglich ist.

Die DE 100 03 740 C1 zeigt eine Batterie mit einer Wärmeabführeinrichtung, wobei eine Mehrzahl von Batteriezellen in Serie geschaltet sind, wobei die Serienanordnung der Batteriezellen einen äußeren positiven Pol und einen äußeren negativen Pol aufweist, wobei an den Polen Zellverbinder angebracht sind und wobei Mittel zur Abfuhr von Verlustwärme der Serienanord-nung vorgesehen sind, wobei zumindest ein Zellverbinder mit wärmeabführenden Mitteln verbunden ist.

Eine derartige Anordnung lässt jedoch noch einige Wünsche offen. Insbesondere wird durch die Vielzahl der Zellverbinder die Montage erheblich er-schwert.

Es ist daher Aufgabe der Erfindung eine elektrochemische Energiespeichereinheit zur Verfügung zu stellen, bei der durch eine Verringerung der Anzahl der Teile die Montage erheblich vereinfacht wird. Ferner soll eine ausreichende Kühlung der elektrochemischen Energiespeichereinheit während der gesamten Betriebszeit gewährleistet werden.

Diese Aufgabe wird gelöst durch eine elektrochemische Speichereinheit mit den Merkmalen des Anspruchs 1. Vorteilhafte Ausgestaltungen sind Gegenstand der Unteransprüche.

In einem Grundgedanken der Erfindung ist eine elektrochemische Energiespeichereinheit mit einer Mehrzahl von Flachzellen ausgeführt, wobei die Flachzellen jeweils mindestens zwei Ableiter und eine Ummantelung mit einer ersten und einer zweiten Stirnseite und einer ersten und einer zweiten flächigen Seite aufweisen, wobei die Ableiter zumindest teilweise aus der ersten und/oder zweiten Stirnseite hervortreten und zumindest ein Ableiter einer ersten Flachzelle mit zumindest einem Ableiter einer zweiten Flachzelle über zumindest ein Verbindungselement elektrisch miteinander verbunden sind. Im Sinne der Erfindung wird unter "flächiger Seite" die Seite der Flach-zelle mit der größeren Fläche und unter "Stirnseite" die Seite der Flachzelle mit der kleineren Fläche verstanden. Die Speichereinheit ist derart aufgebaut, dass die Flachzellen mit ihren flächigen Seiten zueinander angeordnet sind und sich somit zwei gemeinsame Stirnseiten der Flachzellen ergeben.

Erfindungsgemäß sind nun auf einer Stirnseite mehrere Verbindungselemen-te, die jeweils zumindest einen Ableiter einer ersten Flachzelle mit zumindest einem Ableiter einer zweiten Flachzelle elektrisch verbinden, zu einer Baueinheit zusammengefügt. Durch diese Anordnung wird eine erhebliche Reduktion der Teile der elektrochemischen Energiespeichereinheit erreicht und die Montage erheblich vereinfacht.

In einer weiteren Ausführungsform der Erfindung sind die Verbindungselemente an ihren jeweiligen Enden durch Stege miteinander verbunden. Durch diese Anordnung entsteht eine Baueinheit mit Schlitzen, in die die Ableiter der Flachzellen eingeführt werden.

In einer bevorzugten Ausführungsform der Erfindung werden Bereiche der Baueinheit, insbesondere die Stege, mit Kunststoff umspritzt, so dass Aussparungen im Kunststoff ein späteres ausklinken oder ausstanzen der Stege ermöglichen. Das Entfernen der Stege ist für eine serielle Verschaltung der Flachzellen notwendig, da andernfalls eine galvanische Trennung der einzelnen Verbindungselemente nicht erreicht werden kann. Wird eine Parallel-schaltung der Flachzellen angestrebt, können einzelne oder alle Stege erhalten bleiben. Somit kann durch einen sehr einfachen Herstellungsprozess eine serielle oder parallele Verschaltung der Energiespeichereinheit realisiert werden.

In einer weiteren Ausführungsform der Erfindung sind die Ableiter mit einem Verbindungselement stoffshlüssig, insbesondere durch ein Ultraschallschweißverfahren, verbunden. Durch dieses Verfahren wird der Wärmeeintrag während der Montage der Speichereinheit erheblich reduziert.

Gemäß der Erfindung sind die Verbindungselemente form- und/oder kraftschlüssig durch Nieten mit einer Wärmesenke verbunden. Durch eine derartige Anordnung wird eine thermisch effiziente Anbindung der Wärmesenke an die Verbindungselemente erreicht. Die Wärmesenke kann beispielsweise durch kühl- oder kältemitteldurchströmte Rohre, insbesondere Flachrohre, dargestellt werden. Selbstverständlich ist es auch möglich, die Wärmesenke, die insbesondere plattenförmig ausgebildet ist, mit Kühlluft zu beströmen.

In einer weiteren Ausführungsform der Erfindung sind Wärmesenken auf beiden Stirnseiten der Flachzellen angeordnet.

In einer weiteren Ausführungsform der Erfindung ist zwischen der Wärmesenke und den Verbindungselementen, die aus Metall, bevorzugt Aluminium oder Kupfer, bestehen, eine elektrisch isolierende Wärmeleitfolie angeordnet, um Kurzschlüsse über die Wärmesenke zu vermeiden.

Vorteilhaft ist, dass das Verbindungselement U-förmig, I-förmig, L-förmig oder kastenförmig ausgebildet ist.

Vorteilhaft ist, dass die Flachzellen als Lithium-Ionen oder Lithium Polymer-Zellen ausgebildet sind.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere wichtige Merkmale der vorliegenden Erfindung ergeben sich aus der nachfolgenden detaillierten Beschreibung in Verbindung mit den Ansprüchen und den Zeichnungen.

Nachfolgend werden bevorzugte Ausführungsbeispiele einer erfindungsgemäßen elektrochemischen Speichereinheit beschrieben und anhand der anliegenden Zeichnungen näher erläutert.

Es zeigen:
Fig. 1 eine schematische Vorderansicht eines Ausschnittes einer elektrochemischen Energiespeichereinheit gemäß vorliegender Erfindung entlang der Linie I-I aus Figur 2;
Fig. 2 eine schematische Draufsicht auf eine aus drei Verbindungselementen bestehende Baueinheit;
Fig. 3 eine weitere Ausführungsform einer erfindungsgemäßen Baueinheit;
Fig. 4 eine weitere Ausführungsform einer erfindungsgemäßen Baueinheit;

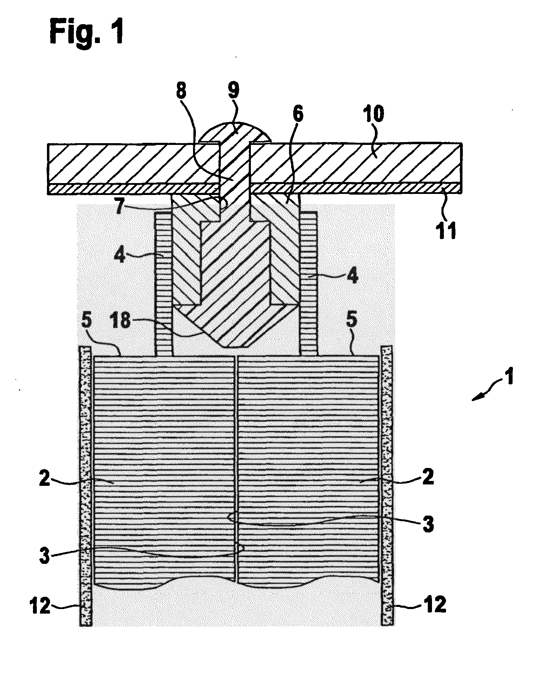

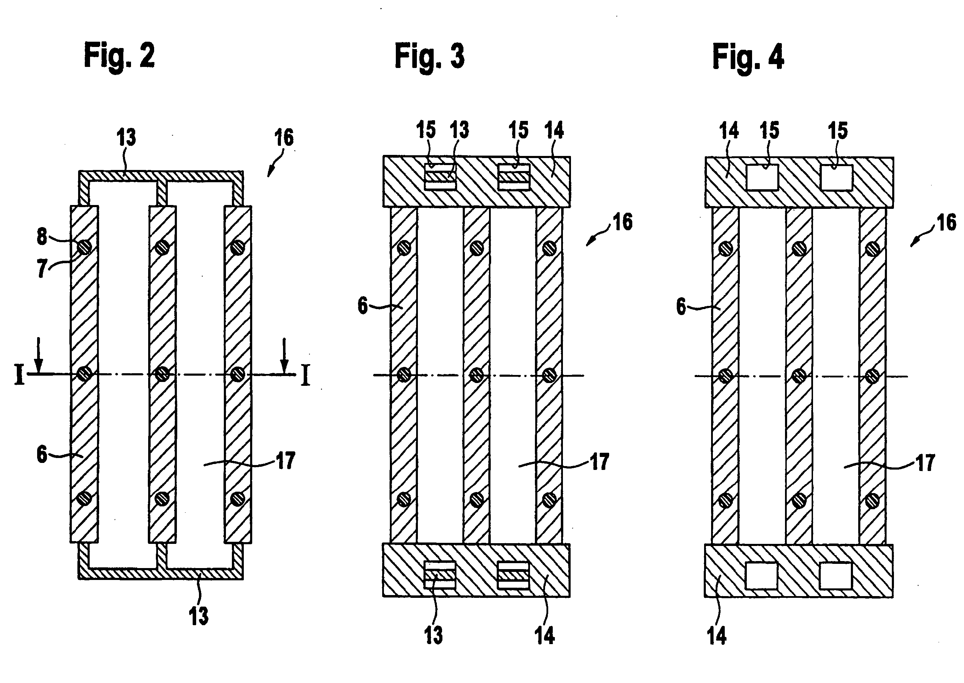

Fig. 1 zeigt eine schematische Vorderansicht eines Ausschnittes einer elektrochemischen Energiespeichereinheit 1 gemäß eines ersten Ausführungsbeispieles der vorliegenden Erfindung entlang der Linie I-I aus Fig. 2. Ein derartiger Energiespeicher weist eine Mehrzahl von Flachzellen 2 auf, die mit ihrer flächigen Seite 3 parallel zueinander angeordnet sind und einen Zellstapel bilden. Eine typische Energiespeichereinheit umfasst etwa vierzig Flachzellen. Es ist jedoch durchaus möglich, dass die Energiespeichereinheit mehr oder weniger als vierzig Zellen umfasst. Der Ableiter 4 wird über die Stirnseite 5 aus der Flachzelle 2 herausgeführt und über ein Verbindungselement 6 mit einem Ableiter 4 einer weiteren Zelle 2 elektrisch und mechanisch kontaktiert. Die Verbindung zwischen dem Ableiter 4 und dem Verbindungselement 6 wird durch ein stoffschlüssiges Verfahren, insbesondere durch ein Ultraschallschweißverfahren, realisiert. Natürlich ist es auch möglich die Verbindung durch ein anderes Verfahren, beispielsweise durch ein Lötverfahren, herzustellen.

Das Verbindungselement 6, das bevorzugt aus Kupfer oder Aluminium besteht, ist U-förmig ausgebildet und gemäß Fig. 2 mit drei Durchbrüchen 7 versehen, die als Aufnahme für Nietdorne 8 dienen. Durch die Nietdome 8 beziehungsweise Nietköpfe 9, die bevorzugt aus Kunststoff bestehen, wird eine mechanische Verbindung zwischen dem Verbindungselement 6 und einer Wärmesenke 10 sichergestellt. Auf die Herstellung der Nietköpfe 9 soll später eingegangen werden. Die Nietdorne 8 weisen Einfuhrschrägen 18 für eine einfache Einführung der Ableiter 4 bei der Montage auf.

Die Flankenlänge des U-förmigen Verbindungselements 6 ermöglicht neben einer vergrößerten Kontaktierungsfläche zwischen Ableiter 4 und Verbindungselement 6 gleichzeitig einen Toleranzausgleich und zwar in der Art, dass die Ableiterposition parallel zur Kontaktfläche verschoben angeordnet sein kann.

Die Wärmesenke 10 ist nur schematisch dargestellt und kann beispielsweise aus einem oder mehreren Flachrohren, durch die ein Kältemittel strömt, bestehen. Natürlich ist es auch möglich die Wärmesenke mit Kühlluft zu beströmen.

Gemäß Fig. 1 ist zwischen der Wärmesenke 10 und dem Verbindungselement 6 eine Wärmeleitfolie 11 angeordnet. Die Wärmeleitfolie 11 dient einerseits dazu, die Wärme aus dem Verbindungselement 6 an die Wärmesenke 10 abzugeben und andererseits dazu, einen Kurzschluss der einzelnen Zellen über die Wärmesenke 10 zu vermeiden.

Durch diese Ausführungsform wird eine relativ einfache und bauraumsparende thermische Anbindung der Wärmesenke an die Flachzelle realisiert, da die Wärme über die Ableiter und das Verbindungselement zur Wärmesenke transportiert wird und somit auf Kühlplatten oder Umströmungskanäle für ein Kühlmedium zwischen den Flachzellen verzichtet werden kann.

Gemäß Fig. 1 werden die Flachzellen 2 zu baugleichen Zell-Paaren zusammengefasst. Größere Zellstapel werden aus baugleichen Zell-Paaren aufgebaut, wobei weitere in Fig. 1 nicht dargestellte Zellpaare über ein Vlies 12, das parallel zur flächigen Seite 3 der Flachzelle 2 angeordnet ist, angefügt werden können. Das Vlies stellt eine Ausgleichsschicht dar, mit der die Dickentoleranz der wenig kompressiblen Zellen durch Vorspannung ausgeglichen und damit ein Zellstapel mit gleichmäßiger Teilung dargestellt werden kann. Die gleichmäßige Teilung ist notwendig, weil jede Flachzelle definiert elektrisch kontaktiert werden muss. Weiterhin ermöglicht das Vlies eine Dickenschwankung der Zellen, die sich abhängig vom Ladezustand ergibt.

Bei dem Ausführungsbeispiel nach Fig. 1 ist die thermische Anbindung der Wärmesenke 10 an die erste Stirnseite 5 der Flachzellen 2 dargestellt. In einer nicht gezeigten Ausführungsform kann eine im Wesentlichen baugleiche thermische Anbindung an die zweite nicht dargestellte Stirnseite der Flachzellen realisiert werden.

In Fig. 2 ist eine erste Ausführungsform einer erfindungsgemäßen Baueinheit 16 aus drei Verbindungselementen 6 in einer schematischen Draufsicht dargestellt. Der Übersichtlichkeit wegen wurde in Fig. 2 auf eine Darstellung der Flachzellen 2 und der Wärmesenke 10 verzichtet. Gemäß Fig. 2 besteht die Baueinheit aus drei Verbindungselementen 6. Selbstverständlich kann eine erfindungsgemäße Baueinheit beliebig viele Verbindungselemente 6 aufweisen. Die Verbindungselemente 6 sind durch Stege 13, die insbesondere aus demselben Material wie die Verbindungselemente bestehen, miteinander verbunden. Die Stege sind im Wesentlichen rechtwinklig beziehungsweise fluchtend zu den Verbindungselementen angeordnet und verbinden die jeweiligen Enden der Verbindungselemente. Die Baueinheit 16 weist zwischen den Verbindungselementen 6 Schlitze 17 auf, in die die Ableiter der Flachzellen bei der Montage eingeführt werden.

Die Verbindungselemente weisen jeweils drei Durchbrüche 7 auf, aus denen Nietdome 8 auskragen. Diese Nietdome werden beispielsweise durch Ultraschallschweißen oder ein anderes thermisches Verfahren in Nietköpfe umgeformt, um die Wärmesenke 10 und die Wärmeleitfolie 11 form- und/oder kraftschlüssig mit der Baueinheit 16 zu verbinden. Selbstverständlich ist auch eine beliebige andere mechanische Verbindung zwischen der Wärmesenke und den Verbindungselementen möglich.

Um die Nietköpfe in einem Arbeitsgang auszuformen, kann beispielsweise eine beheizte mit Noppen versehene Form kurz aufgepresst werden.

Gemäß Fig. 2 weisen die Verbindungselemente 6 jeweils drei Durchbrüche für die Nietdorne auf. In einem nicht gezeigten Ausführungsbeispiel können die Verbindungselemente eine beliebige Anzahl an Durchbrüchen aufweisen. Die Nietdome sind bevorzugt aus Kunststoff, insbesondere POM, oder können durch einen Metallkern verstärkt werden.

Fig. 3 zeigt eine weitere Ausführungsform einer aus drei Verbindungselementen 6 bestehenden Baueinheit 16. In dieser Ausführungsform ist die Baueinheit bereichsweise, insbesondere an den jeweiligen Enden der Verbindungselemente 6, mit Kunststoff 14 umspritzt. Der Kunststoff 14 weist im Wesentlichen rechtwinklige Aussparungen 15 auf, um die Stege 13 für eine serielle Verschaltung der Flachzellen trennen zu können. Eine derartige Ausführungsform ist in Fig. 4 dargestellt. Ferner übernimmt das Kunststoffspritzteil 14 die Funktion die einzelnen Verbindungselemente 6 vorzupositionieren.

## Patentansprüche

1. Elektrochemische Energiespeichereinheit (1), umfassend eine Mehrzahl von Flachzellen (2), jeweils umfassend mindestens zwei Ableiter (4) und eine Ummantelung mit einer ersten und einer zweiten Stirnseite (5) und einer ersten und einer zweiten flächigen Seite (3), wobei die Ableiter zumindest teilweise aus der ersten und/oder zweiten Stirnseite hervortreten und zumindest ein Ableiter einer ersten Flachzelle mit zumindest einem Ableiter einer zweiten Flachzelle über zumindest ein Verbindungselement (6) elektrisch miteinander verbunden sind, wobei auf einer Stirnseite mehrere Verbindungselemente zu einer Baueinheit (16) zusammengefügt sind, **dadurch gekennzeichnet, dass** das Verbindungselement zumindest mittelbar mit einer Wärmesenke (10) in thermischen Kontakt steht und die Wärmesenke form- und/oder kraftschlüssig mit dem Verbindungselement verbunden ist, wobei die Wärmesenke durch Niete (8) mit dem Verbindungselement verbunden ist.

2. Elektrochemische Energiespeichereinheit nach Anspruch 1, **dadurch gekennzeichnet, dass** die Baueinheit (16) Stege (13) aufweist.

3. Elektrochemische Energiespeichereinheit nach Anspruch 1 oder 2, **dadurch gekennzeichnet, dass** die Baueinheit (16) Schlitze (17) aufweist.

4. Elektrochemische Energiespeichereinheit nach einem der vorhergehenden Ansprüche, **dadurch gekennzeichnet, dass** die Baueinheit zumindest bereichsweise mit Kunststoff (14) umspritzt ist.

5. Elektrochemische Energiespeichereinheit nach einem der vorhergehenden Ansprüche, **dadurch gekennzeichnet, dass** die Ableiter stoffschlüssig, insbesondere durch ein Ultraschallschweißverfahren, mit einem Verbindungselement verbunden sind.

6. Elektrochemische Energiespeichereinheit nach einem der vorhergehenden Ansprüche, **dadurch gekennzeichnet, dass** das Verbindungselement aus Metall, insbesondere aus Kupfer oder Aluminium, besteht.

7. Elektrochemische Energiespeichereinheit nach einem der vorhergehenden Ansprüche, **dadurch gekennzeichnet, dass** die Wärmesenke plattenförmig ausgebildet ist.

8. Elektrochemische Energiespeichereinheit nach einem der vorhergehenden Ansprüche, **dadurch gekennzeichnet, dass** die Wärmesenke aus mindestens einem fluiddurchströmbaren Rohr, insbesondere einem Flachrohr, besteht.

9. Elektrochemische Energiespeichereinheit nach Anspruch 8, **dadurch gekennzeichnet, dass** das Fluid ein Kältemittel ist.

10. Elektrochemische Energiespeichereinheit nach einem der vorhergehenden Ansprüche, **dadurch gekennzeichnet, dass** die Niete aus Kunststoff bestehen.

11. Elektrochemische Energiespeichereinheit nach einem der vorhergehenden Ansprüche, **dadurch gekennzeichnet, dass** zwischen dem Verbindungselement und der Wärmesenke eine Wärmeleitfolie (11) angeordnet ist

12. Elektrochemische Energiespeichereinheit nach Anspruch 11, **dadurch gekennzeichnet, dass** die Wärmeleitfolie elektrisch isolierend wirkt.

13. Elektrochemische Energiespeichereinheit nach einem der vorhergehenden Ansprüche, **dadurch gekennzeichnet, dass** zwischen benachbarten Flachzellen, Insbesondere nach jeder zweiten Flachzelle, ein Vlies angeordnet ist.

## Claims

1. An electrochemical energy storage unit (1), comprising a plurality of flat cells (2), each comprising at least two output connectors (4) and a sheath having a first and a second end face (5) and a first and a second flat face (3), wherein the output connectors project at least partially out of the first and/or second end face, and at least one output connector of a first flat cell is electrically connected to at least one output connector of a second flat cell via at least one connecting element (6), wherein a plurality of connecting elements are assembled on one end face so as to form a structural unit (16), **characterized in that** the connecting element is at least indirectly in thermal contact with a heat sink (10) and the heat sink is connected to the connecting element in a positive and/or nonpositive locking manner, wherein the heat sink is connected to the connecting element by means of rivets (8).

2. The electrochemical energy storage unit according to claim 1, **characterized in that** the structural unit (16) has webs (13).

3. The electrochemical energy storage unit according to claim 1 or claim 2, **characterized in that** the structural unit (16) has slots (17).

4. The electrochemical energy storage unit according to any one of the preceding claims, **characterized in that** the structural unit is overmolded with plastic (14) at least in certain areas.

5. The electrochemical storage unit according to any one of the preceding claims, **characterized in that** the output connectors are connected to a connecting element in a firmly bonding manner, in particular by means of an ultrasonic welding method.

6. The electrochemical energy storage unit according to any one of the preceding claims, **characterized in that** the connecting element consists of metal, in particular of copper or aluminum.

7. The electrochemical energy storage unit according to any one of the preceding claims, **characterized in that** the heat sink is plate-shaped.

8. The electrochemical energy storage unit according to any one of the preceding claims, **characterized in that** the heat sink consists of at least one tube, in particular a flat tube, through which a fluid can flow.

9. The electrochemical energy storage unit according to claim 8, **characterized in that** the fluid is a refrigerant.

10. The electrochemical energy storage unit according to any one of the preceding claims, **characterized in that** the rivets consist of plastic.

11. The electrochemical energy storage unit according to any one of the preceding claims, **characterized in that** a thermally conductive foil (11) is arranged between the connecting element and the heat sink.

12. The electrochemical energy storage unit according to claim 11, **characterized in that** the thermally conductive foil acts in an electrically insulating manner.

13. The electrochemical energy storage unit according to any one of the preceding claims, **characterized in that** a nonwoven material is arranged between adjacent flat cells, in particular after every other flat cell.

## Revendications

1. Ensemble accumulateur d'énergie électrochimique (1) comprenant une pluralité d'éléments plats (2), comprenant à chaque fois au moins deux collecteurs (4) et une enveloppe comportant un premier et un second côtés frontaux (5) et un premier et un second côtés (3) ayant une plus grande surface, où les collecteurs dépassent au moins partiellement du premier et/ou du second côté frontal, et au moins un collecteur d'un premier élément plat et au moins un collecteur d'un deuxième élément plat sont connectés l'un à l'autre électriquement par au moins un élément de liaison (6), où plusieurs éléments de liaison sont assemblés sur un côté frontal, pour former un ensemble unitaire (16), **caractérisé en ce que** l'élément de liaison est au moins indirectement en contact thermique avec un dissipateur de chaleur (10), et le dissipateur de chaleur est assemblé avec l'élément de liaison, par adaptation de forme et/ou par action de force, où le dissipateur de chaleur est assemblé avec l'élément de liaison, par des rivets (8).

2. Ensemble accumulateur d'énergie électrochimique selon la revendication 1, **caractérisé en ce que** l'ensemble unitaire (16) présente des barrettes (13).

3. Ensemble accumulateur d'énergie électrochimique selon la revendication 1 ou 2, **caractérisé en ce que** l'ensemble unitaire (16) présente des fentes (17).

4. Ensemble accumulateur d'énergie électrochimique selon l'une quelconque des revendications précédentes, **caractérisé en ce que** l'ensemble unitaire est au moins partiellement enrobé de matière plastique (14) moulée par injection.

5. Ensemble accumulateur d'énergie électrochimique selon l'une quelconque des revendications précédentes, **caractérisé en ce que** les collecteurs sont assemblés avec un élément de liaison, par continuité de matière, en particulier par un procédé de soudure à ultrasons.

6. Ensemble accumulateur d'énergie électrochimique selon l'une quelconque des revendications précédentes, **caractérisé en ce que** l'élément de liaison est en métal, en particulier en cuivre ou en aluminium.

7. Ensemble accumulateur d'énergie électrochimique selon l'une quelconque des revendications précédentes, **caractérisé en ce que** le dissipateur de chaleur est configuré en forme de plaque.

8. Ensemble accumulateur d'énergie électrochimique selon l'une quelconque des revendications précédentes, **caractérisé en ce que** le dissipateur de chaleur se compose d'au moins un tube, en particulier d'un tube plat, pouvant être traversé par un fluide.

9. Ensemble accumulateur d'énergie électrochimique selon la revendication 8, **caractérisé en ce que** le fluide est un fluide frigorigène.

10. Ensemble accumulateur d'énergie électrochimique selon l'une quelconque des revendications précédentes, **caractérisé en ce que** les rivets sont en matière plastique.

11. Ensemble accumulateur d'énergie électrochimique selon l'une quelconque des revendications précédentes, **caractérisé en ce qu'**une feuille (11) conductrice de la chaleur est disposée entre l'élément de liaison et le dissipateur de chaleur.

12. Ensemble accumulateur d'énergie électrochimique selon la revendication 11, **caractérisé en ce que** la feuille conductrice de la chaleur agit de façon électro-isolante.

13. Ensemble accumulateur d'énergie électrochimique selon l'une quelconque des revendications précédentes, **caractérisé en ce qu'**un tissu non tissé est disposé entre des éléments plats adjacents, en particulier après chaque deuxième élément plat.
